# EUROPEAN PATENT APPLICATION

(11) **EP 3 812 120 A1**
(43) Date of publication of application: **28.04.2021**
(21) Application number: 19205145.6
(22) Date of filing: 24.10.2019
(51) Int. Cl.: B29B 17/00, B29C 69/00, B29C 70/54, B29K 105/06, B29K 105/08, B29K 105/12

(54) **RECYCLING OF COMPOSITE MATERIALS**

(71) Applicant: Arrival Limited, London W14 8TS (GB)
(72) Inventor: THOMPSON, Rob, London W14 8TS (GB); CHAPMAN, Jennifer, London W14 8TS (GB)
(74) Representative: Korenberg, Alexander Tal

(57) **Abstract**

Disclosed is a method of recycling thermoplastic composite fabric, wherein the thermoplastic composite fabric is a precursor for making a composite structure. The method comprises: providing thermoplastic composite fabric offcuts comprising a weave of thermoplastic polymer fibres and structural fibres, and combining the thermoplastic fabric offcuts to form recycled thermoplastic composite fabric, wherein the recycled thermoplastic composite fabric is a precursor for making a first composite structure. The offcuts may be combined by fluffing up and needle punching. Also disclosed is a corresponding recycled thermoplastic composite fabric and a composite part made using such a fabric, as well as precursor materials and composite parts comprising a non-woven thermoplastic composite core.

## Description

The present disclosure relates to a method for recycling a thermoplastic composite fabric, and the resulting recycled fabric.

A composite structure is a structure that is made from a composite material, which is a material made from two or more constituent materials with significantly different physical or chemical properties that, when combined, produce a material with characteristics different from the individual components. The individual components remain separate and distinct within the finished structure, differentiating composites from mixtures. The new material may be preferred for many reasons, for example the composite material may be stronger, lighter, or less expensive when compared to traditional materials. Naturally, these benefits are also exhibited by a composite structure or part made from a composite material.

Thermoplastic composites are composites comprising a thermoplastic polymer, which can be heat-processed. Composite structures and parts formed from thermoplastic composite materials, such as fabrics made from combined, for example commingled, glass and thermoplastic polymer fibres, may be preferred to thermoset composites since they tend to be less brittle, can have better chemical resistance and can be more easily repaired.

Due to environmental and cost considerations there is an increasing tendency to recycle as much as possible but satisfactory recycling methods are not currently available in the context of composite material processing.

Aspects of the disclosure are set out in the independent claims and optional features are set out in the claims dependent thereon.

Disclosed is a method of recycling thermoplastic composite fabric, wherein the thermoplastic composite fabric is a precursor for making a composite structure. The method comprises: providing thermoplastic composite fabric offcuts comprising a weave of thermoplastic polymer fibres and structural fibres, and combining the thermoplastic fabric offcuts to form recycled thermoplastic composite fabric, wherein the recycled thermoplastic composite fabric is a precursor for making a first composite structure. The wording "precursor for making a composite structure" as used herein means the fabric (both recycled and non-recycled) is suitable for being heated and moulded into a composite structure, for example as described below, either with or without further shaping or cutting.

It has been identified that by using thermoplastic composite fabric as a precursor material to manufacture composite structures (as opposed to using pre-consolidated thermoplastic composite sheet material, known as "organo sheet", for example, or thermoset, resin-based techniques), the precursor material can be efficiently recycled with little loss of mechanical properties.

Generally, when thermoplastic composite fabric is cut to shape before being heated and moulded into a composite structure, thermoplastic composite fabric offcuts are left over. Ordinarily recycling methods for polymer materials involve shredding the materials into pellets and using the pellets as a feedstock for injection moulding. As a feedstock for injection moulding, the offcuts would have a much lower value than the fabric from which they were cut. Instead of being wasted or turned into injection moulding feedstock, in the present method offcuts of the precursor material are combined into recycled thermoplastic composite fabric suitable for moulding into a further composite structure, realising the full value of the offcuts.

A "fabric" can be understood to be a weave, mesh or non-woven structure of fibres, such as a felt. Turning to the materials of the thermoplastic composite fabric offcuts (and, therefore, the fabric from which they were cut) the thermoplastic polymer fibres may be made of any thermoplastic polymer such as polypropylene or a polyester such as polyethylene terephthalate. The structural fibres may be made of any structural fibre known to the skilled person, such as glass fibre or carbon fibre, so long as the fibres are not adversely affected by heat during processing of the thermoplastic composite fabric into a composite structure (known as consolidation of the composite). Thus, a thermoplastic composite fabric comprises a weave of thermoplastic polymer fibres and structural fibres.

The fabric of the precursor material may comprise a weave of combined, for example commingled, fibres, the combined fibres forming a yarn or thread comprising thermoplastic polymer and structural fibres combined together. That is, the fabric may be woven from structural fibres and polymer fibres that are already combined together. Alternatively, the fibres may be combined as they are woven, for example by parallel weaving the separate fibres into the same fabric at the same time. In each case, the fabric may be a non-woven fabric, such as a felt, of the combined fibres instead of a woven fabric.

The terms "yarn" and "thread" are used in a broad sense to cover any yarn or thread of a suitable form factor to be woven, knitted or otherwise constructed into a fabric. In the same sense, the term "fibre" is understood to cover a wide range filaments and cross-sectional form factors of the fibre and is understood to cover tape, and in particular spread tow tape, in relation to either or both of reinforcing and thermoplastic polymer fibres. The yarn may be a combined yarn formed by combining, for example commingling or parallel weaving, different fibres, for example fibres of thermoplastic polymer and reinforcing fibres.

Thermoplastic composite fabric offcuts may be sourced from a third party or otherwise prepared independently of the present method. Alternatively, the method may incorporate cutting thermoplastic composite fabric into a main portion for making a second composite structure and an offcut portion, wherein an offcut portion is one of the thermoplastic composite fabric offcuts. The first and second composite structures made from the recycled thermoplastic composite fabric and main portion, respectively, may be the same or different, and may be made in any order. The main portion may be cut from a roll or other supply of thermoplastic composite fabric, and the cutting may result in multiple offcuts. The offcut portion is generally smaller than the main portion and not suitable for making a further thermoplastic composite structure by itself. For example, the offcut may be too small of the wrong shape. It will be understood that the thermoplastic composite fabric offcuts that are recycled together will not necessarily all be cut from the same piece or even the same supply of thermoplastic composite fabric.

Turning to how the thermoplastic composite fabric offcuts are combined, this may comprise needle punching the thermoplastic composite fabric offcuts together and/or stitching the thermoplastic composite fabric offcuts together. In some specific embodiments, combining the thermoplastic composite fabric offcuts comprises at least partially separating the fibres of the offcut fabric, for example fluffing up the fibres and shredding them to within a range of fibre length. The partially separated fibres are then formed into a non-woven fabric such as a felt, for example by needle punching, to form the recycled thermoplastic composite material.

The method may further comprise heating the recycled thermoplastic composite fabric in a mould to form a composite structure, or the recycled thermoplastic may be provided to a third party for their use. The recycled thermoplastic composite fabric may be sandwiched between layers of non-recycled thermoplastic composite material prior to the forming operation to provide a precursor material that is used to form the composite part.

In accordance with the above, also disclosed is a recycled thermoplastic composite fabric formed from thermoplastic composite fabric offcuts as described above, as well as a composite part formed from such a recycled thermoplastic composite fabric. More generally, aspects of the disclosure extend to a precursor material comprising a non-woven thermoplastic composite fabric core (recycled or made from non-recycled fibres) sandwiched between woven thermoplastic composite fabrics and a composite part made from such a precursor material. The fabrics in question may be formed from thermoplastic polymer and structural fibres such as glass or carbon fibres, in some embodiments combined, for example commingled, fibres.

Embodiments will now be described by way of example with reference to the drawings of which:
Figure 1 is a flow diagram of a method of recycling thermoplastic composite fabric;
Figure 2 is an illustration of offcuts of thermoplastic composite fabric being combined to form recycled thermoplastic composite fabric;
Figure 3 is a flow diagram of an alternative method of combining offcuts to form recycled thermoplastic fabric;
Figure 4 is an illustration of fluffed up fibres as an intermediate product of the alternative method;
Figure 5 is an illustration of a machine for forming a non-woven fabric resulting from the alternative method; and
Figure 6 is an illustration of a composite precursor material comprising the recycled non-woven fabric.

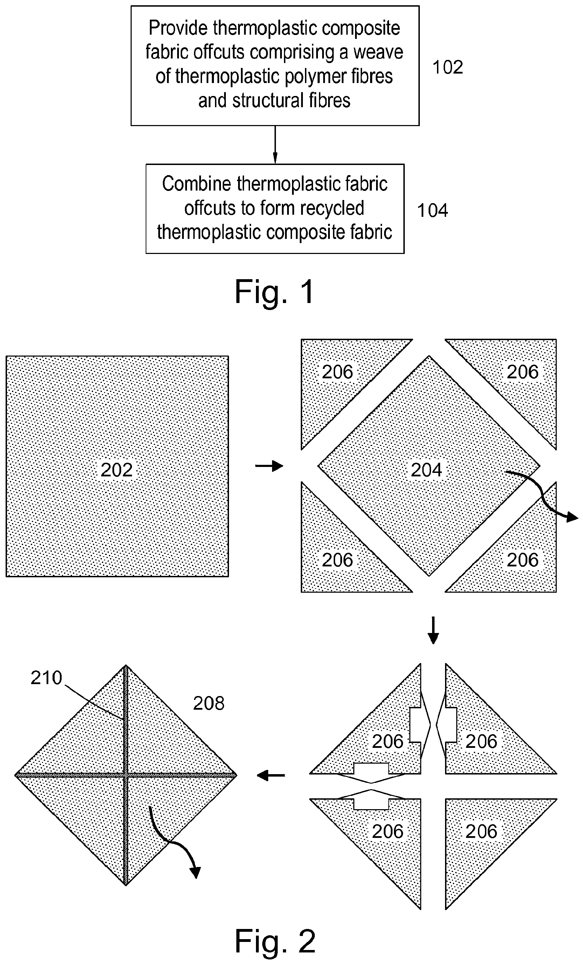

Figure 1 is a flow diagram of a method of recycling thermoplastic composite fabric, as illustrated in Figure 2. The method comprises providing 102 thermoplastic composite fabric offcuts comprising a weave of thermoplastic polymer fibres and structural fibres. For example, thermoplastic composite fabric 202 is cut into a main portion 204 and (for example) four thermoplastic composite fabric offcuts 206. The main portion 204 may be later processed into a composite structure. The method further comprises combining 104 thermoplastic fabric offcuts 206 to form recycled thermoplastic composite fabric 208, which can later be processed into a further composite structure. The recycled thermoplastic composite fabric 208 comprises a seam 210 where the thermoplastic composite fabric offcuts 206 have been joined together when they were combined, for example by needle punching or stitching. As illustrated in Figure 2, the offcut portion may be smaller than the main portion and may not be suitable for making the further thermoplastic composite structure, if it needs to be a similar size to the main portion 204.

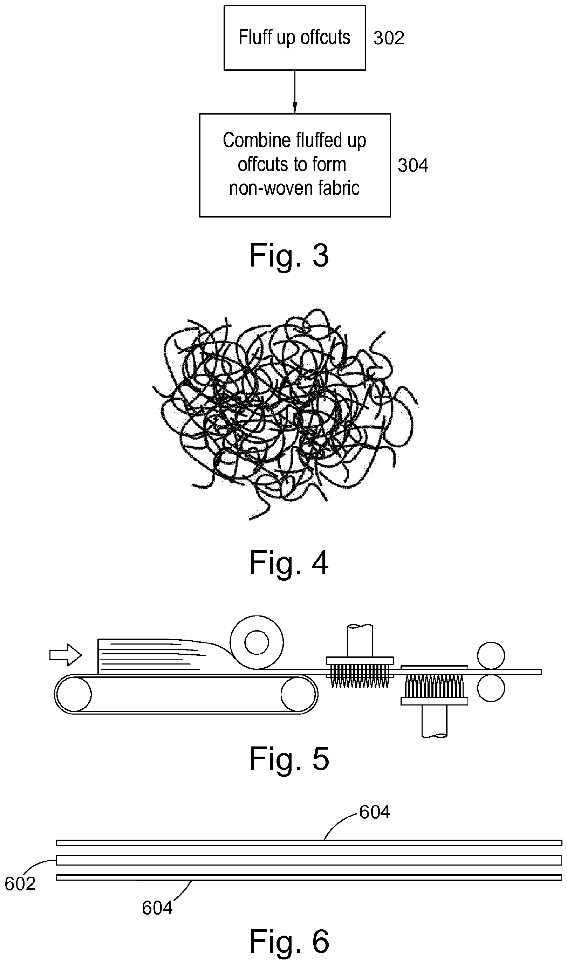

With reference to Figure 3 to 5, in some embodiments of combining 104 the offcuts, the offcuts 206 are combined to form a non-woven fabric. In some specific implementations, the off-cuts 206 are fluffed up 302 to form a fluff or tangle of fibres, illustrated in Figure 4. Fluffing up may involve partially separating the fibres from the weave of fibres in the offcuts, for example by combing or other mechanical separation techniques. The fibres may also be shredded to produce fibres substantially within a range of fibre length, for example with the majority of fibres, say 80%, within the range. The range may, for example, be about 1cm to 5cm, which has been found to provide a good compromise between the structural properties of the resulting material and the uniformity of the fluffed up fibres. The mechanical separation and shredding may occur in a single operation, for example a shredding operation or may involve separate steps.

The resulting fluff is then processed to form 304 a non-woven fabric, such as a felt. The non-woven fabric may be formed, for example by needle punching. The process thus produces a non-woven fabric that can be used as a recycled thermoplastic polymer precursor material. An example machine for producing the non-woven fabric by needle punching and the resulting non-woven fabric are illustrated in Figure 5. Advantageously, by avoiding seams between off-cut portions, this non-woven fabric has uniform structural properties as compared to the recycled fabric described above with reference to Figure 2, while, in some embodiments, enabling a significant proportion of the achievable structural strength (as compared to parts formed from the original fabric) to be retained, due to the relatively high length of fibres that can be retained in the non-woven fabric.

A specific application of the recycled thermoplastic composite fabric, be it woven or non-woven, is to use the recycled thermoplastic composite fabric as a core layer 602 in between (non-recycled) thermoplastic composite precursor material layers 604, as illustrated in Figure 6. The use of the non-woven recycled material is particularly advantageous as the bulk and density of the core layer can be adjusted by suitable choice of the parameters of the needle punching process.

The method may be used to recycle any thermoplastic composite fabric 202 comprising thermoplastic polymer fibres and structural fibres. Examples of thermoplastic polymer fibres that may be used are polypropylene, polyester or polyethylene terephthalate. Examples of structural fibres that may be used are glass fibres or carbon fibres. The method is not limited to these examples and any other suitable thermoplastic polymer fibres or structural fibres known to the skilled person may be used.

In some embodiments, the polypropylene fibres and glass fibres may be combined, for example commingled, such that the fabric may comprise a weave of combined fibres, the combined fibres forming a yarn comprising polypropylene polymer and glass fibres combined together. That is, the fabric may be woven from yarn comprising glass and polypropylene fibres that are already combined together. Alternatively, the fibres may be combined as they are woven, for example by parallel weaving separate polypropylene and glass fibres into the same fabric at the same time. More generally, any thermoplastic polymer fibres and structural fibres of the thermoplastic composite fabric may be combined.

The thermoplastic fabric offcuts are combined 104 to form recycled thermoplastic composite fabric 208, wherein the recycled thermoplastic composite fabric 208 is a precursor for making a further composite structure.

It will be appreciated that providing 102 the thermoplastic composite fabric offcuts 206 may comprise cutting the thermoplastic composite fabric 202 into a main portion 204 for making a composite structure and an offcut portion, as described above, or the offcuts may be provided by a third party.

The method may further comprise heating the recycled thermoplastic composite fabric 208 in a mould to form a composite structure (i.e. the recycled thermoplastic composite fabric 208 may be consolidated). Specifically, the temperature of the recycled thermoplastic composite fabric 208 is raised above a consolidation temperature, at which point the polypropylene is fluid enough to wet-out (flow around) the glass fibres. If the polypropylene melts at the consolidation temperature, polypropylene fibres may fuse together once cooled below their melting point, forming a continuous structure. The consolidation temperature may be equal to or above the glass transition/melting temperature of the polypropylene, although it may also be lower, so long as the polypropylene becomes fluid enough to flow around the glass fibres. The consolidation temperature is typically between 180-220 °C for polypropylene. As would be understood, the consolidation temperature may be different for different thermoplastics.

The recycled thermoplastic composite fabric 208 is then pressed or otherwise urged into contact with a mould, under its own weight, fluid pressure, mechanical pressure or otherwise, at which point the recycled thermoplastic composite fabric 208 takes on the shape of the mould. The recycled thermoplastic composite fabric 208 is then cooled to below the consolidation temperature to form a composite structure. This composite structure may be the same or may be different from the one made from the main portion 204.

It will be appreciated that the above description is made by way of example and not limitation of the scope of the appended claims, including any equivalents as included within the scope of the claims. Various modifications are possible and will be readily apparent to the skilled person in the art. Likewise, features of the described embodiments can be combined with any appropriate aspect described above and optional features of any one aspect can be combined with any other appropriate aspect.

## Claims

1. A method of recycling thermoplastic composite fabric, wherein the thermoplastic composite fabric is a precursor for making a first composite structure, the method comprising:
providing thermoplastic composite fabric offcuts comprising a weave of thermoplastic polymer fibres and structural fibres; and
combining the thermoplastic fabric offcuts to form recycled thermoplastic composite fabric, wherein the recycled thermoplastic composite fabric is a precursor for making a second composite structure.

2. The method of claim 1, wherein providing thermoplastic composite fabric offcuts comprises cutting the thermoplastic composite fabric into a main portion for making the first composite structure and an offcut portion, wherein the offcut portion is one of the thermoplastic composite fabric offcuts.

3. The method of claim 2, wherein the offcut portion is smaller than the main portion and/or is not suitable for making the further thermoplastic composite structure.

4. The method of any preceding claim, wherein combining the thermoplastic composite fabric offcuts comprises fluffing up the thermoplastic composite fabric offcuts and combining the fluffed up thermoplastic composite fabric offcuts into a non-woven fabric to for the recycled thermoplastic composite fabric.

5. The method of claim 4 comprising needle punching the fluffed up thermoplastic composite fabric offcuts to form the non-woven fabric.

6. The method of claim 4 or 5, wherein fluffing up the thermoplastic composite fabric offcuts comprises at least partially mechanically separating and shredding the thermoplastic composite fabric offcuts.

7. The method of claim 6, wherein shredding the thermoplastic composite fabric offcuts results in fibres with a length in the range of 1 to 5cm.

8. The method of claim 1, 2 or 3, wherein combining the thermoplastic composite fabric offcuts comprises needle punching the thermoplastic composite fabric offcuts together and/or stitching the thermoplastic composite fabric offcuts together.

9. The method of any preceding claim, the method further comprising heating the recycled thermoplastic composite fabric in a mould to form the first composite structure.

10. A recycled thermoplastic composite fabric formed from thermoplastic composite fabric offcuts, the thermoplastic composite fabric offcuts each comprising a fabric of thermoplastic polymer fibres and structural fibres.

11. The recycled thermoplastic composite fabric of claim 10, wherein the recycled thermoplastic composite fabric is a non-woven fabric.

12. The recycled thermoplastic composite fabric of claim 6, wherein the thermoplastic composite fabric offcuts have been fluffed up and needle punched together to form the recycled thermoplastic composite fabric.

13. The recycled thermoplastic composite material according to any one of claims 10 to 12 sandwiched as a core between layers of non-recycled thermoplastic composite material.

14. The thermoplastic composite fabric of any one of claims 10 to 13, made using a method as claimed in any one of claims 1 to 9.

15. A thermoplastic composite part formed from thermoplastic composite fabric comprising a non-woven thermoplastic composite fabric core sandwiched between woven thermoplastic composite fabrics.
